# EUROPÄISCHE PATENTSCHRIFT

(11) **EP 3 414 086 B1**
(45) Veröffentlichungstag und Bekanntmachung des Hinweises auf die Patenterteilung: **17.08.2022**
(21) Anmeldenummer: 17702324.9
(22) Anmeldetag: 24.01.2017
(51) Int. Cl.: B30B 7/04, B21D 39/04, B30B 15/04

(54) **RADIALPRESSE**
RADIAL PRESS
PRESSE RADIALE

(30) Priorität: 10.02.2016 DE 102016102275
(43) Veröffentlichungstag der Anmeldung: 19.12.2018
(73) Patentinhaber: Uniflex-Hydraulik GmbH, 61184 Karben (DE)
(72) Erfinder: HEJPLIK, Vaclav, 63128 Dietzenbach (DE); BAUMGARTNER, Carsten, 35321 Laubach (DE); ZIENTEK, Lukas, 61200 Wölfersheim (DE)
(74) Vertreter: Grättinger Möhring von Poschinger Patentanwälte Partnerschaft mbB
(86) Internationale Anmeldenummer: PCT/EP2017/051360
(87) Internationale Veröffentlichungsnummer: WO 2017/137245

(56) Entgegenhaltungen:
- WO-A2-2007/110736
- WO-A2-2007/110736
- DE-A1- 2 844 475
- DE-A1- 2 844 475
- DE-A1- 4 135 465
- DE-A1- 4 135 465
- US-A- 3 717 024
- US-A- 3 717 024
- US-A- 4 250 735
- US-A- 4 250 735
- US-A1- 2006 090 529
- US-A1- 2006 090 529

## Beschreibung

Die vorliegende Erfindung betrifft eine Radialpresse mit einer Grundstruktur, einer Mehrzahl von um eine Pressachse herum angeordneten Pressbacken und einer auf diese wirkenden, sich an der Grundstruktur abstützenden Antriebseinheit, mittels derer die Pressbacken radial auf die Pressachse zu bzw. von dieser weg bewegbar sind. Insbesondere betrifft die vorliegende Erfindung, wie im Oberbegriff des Anspruchs 1 angegeben, eine derartige, als Druckring- oder Hohlkolbenpresse ausgeführte Radialpresse mit einem die Grundstruktur bildenden Gehäuse und einem in diesem parallel zur Pressachse verschiebbaren Druckring bzw. Hohlkolben.

Radialpressen sind in verschiedenen Bauweisen und Ausführungen bekannt, beispielsweise als sog. "Jochpressen" (vgl. z.B. DE 4135465 A1, DE 19912976 A1 und DE 19817882 B4), "Hohlkolbenpressen" (vgl. z.B. DE 10149924 A1) oder in sonstiger Bauweise (vgl. z.B. DE 2844475 A1, DE 3611253 A1, DE 10047025 C2 und DE 3331721 A1). Die WO 2007/110736 A2, welche die Basis der zweiteiligen Form des Anspruchs 1 bildet, offenbart eine Radialpresse mit einer ringförmigen Grundstruktur. Diese weist radiale Bohrungen auf, welche Hydraulikzylinder bilden, in denen auf die Pressbacken wirkende Kolben geführt sind. Die Kolben werden über eine gemeinsame Hydraulik-Ringleitung mit Druckflüssigkeit beaufschlagt.

Aus der US 4,250,735 A ist eine Druckgussmaschine bekannt. Deren Gießform umfasst drei jeweils an dem Kolben einer Zylinder-Kolben-Anordnung angebrachte Gesenke. Die drei Zylinder-Kolben-Anordnungen sind dabei, über deren Umfang verteilt, an einer ringförmigen Grundstruktur angebracht. Für deren Ausführung wird eine mögliche Verstärkung mittels Drahtwicklung erwähnt.

Die US 2006/0090529 A1 offenbart eine Schließvorrichtung, welche zur Verwendung bei der Herstellung von Metallteilen in geschlossenen Formen - beispielsweise unter Anwendung einer Innen-Hochdruckumformung - bestimmt und geeignet ist. Die Schließvorrichtung umfasst dabei mehrere Spannringe mit jeweils zwei einander gegenüberliegend beabstandeten, Stützflächen aufweisenden Segmenten. Die jeweils um einen Gelenkpunkt zwischen einer Schließstellung und einer Öffnungsstellung verschwenkbaren Spannringe können dabei als Faserverbund ausgeführt sein.

Der Einsatzbereich von gattungsgemäßen und anderen Radialpressen hat sich stetig weiter ausgeweitet. Ausgehend von der klassischen Anwendung, nämlich dem unlösbaren, dauerhaft festen und dichten Anbringen von Anschlussarmaturen (durch sog. Crimpen) an den Enden eines Schlauchabschnitts bei der Herstellung von einbaufertigen Hydraulikleitungen, sind mittlerweile eine Vielzahl anderer Anwendungen üblich geworden bis hin zu dem Verbinden von großkalibrigen Rohren im Pipelinebau.

Die vorliegende Erfindung hat sich zur Aufgabe gemacht, Radialpressen der gattungsgemäßen Art im Hinblick auf das ausgedehnte Anwendungsspektrum zu optimieren bzw. zur Anwendung auf neuen Gebieten zu ertüchtigen.

Gelöst wird die vorstehende Aufgabenstellung mittels einer Radialpresse gemäß Anspruch 1. Bevorzugte Ausführungsformen sind in den abhängigen Ansprüchen definiert. Somit wird die Aufgabe dadurch gelöst, dass einer Radialpresse der eingangs genannten Art radial außerhalb der Pressbacken eine diese umgebende, sich in einer im Wesentlichen auf der Pressachse senkrecht stehenden Ebene in ringförmig geschlossener Form um die Pressachse herum erstreckende Faserstruktur vorgesehen ist. Die vorliegende Erfindung nutzt dabei die Erkenntnis, dass die in Radialpressen der hier in Rede stehenden Art außerhalb der Pressbacken auftretenden Kräfte, Momente und Lasten sich zu einem ganz erheblichen Teil, bei geeigneter Bauweise sogar vollständig oder zumindest nahezu vollständig, in Zugspannungen, welche in einer die Pressbacken umgebenden Struktur wirken, umsetzen bzw. sich durch solche aufnehmen bzw. kompensieren lassen. Derartige Zugspannungen lassen sich wiederum in einer - im Hinblick auf das Gewicht, das Volumen, die Festigkeit, das Dehnverhalten, den Temperaturgang, etc. der lastaufnehmenden Struktur - besonders effizienten Weise durch die erfindungsgemäß vorgesehene ringförmig geschlossene, sich um die Pressachse herum erstreckende Faserstruktur abtragen bzw. beherrschen.

Erfindungsgemäß ist die Faserstruktur dabei Teil der Antriebseinheit, indem der verschiebbare Druckring bzw. Hohlkolben die Faserstruktur enthält. Es ist somit ein Bauelement bzw. eine Baugruppe der Antriebseinheit radial außerhalb der Pressbacken in einer ringförmig geschlossen sich um die Pressachse herum erstreckenden Form von einer Faserstruktur umgeben, welche sich in einer im Wesentlichen auf der Pressachse senkrecht stehenden Ebene erstreckt.

Als Faserstrukturen in diesem Sinne sind dabei solche Strukturen anzusehen, bei denen Langfasern sich in Umfangsrichtung orientiert um die Pressachse herum erstrecken, insbesondere aufgrund der (vollständigen oder zumindest teilweisen) Herstellung in Wickeltechnik. Als Langfasern gelten dabei insbesondere solche Fasern, deren Länge ein Mehrfaches des mittleren Umfangs der ringförmigen Faserstruktur beträgt, so dass sich eine entsprechend große, d. h. mehrfache Umschlingung ergibt. Als besonders vorteilhaft in Betracht kommt dabei insbesondere auch die Herstellung der Faserstruktur in Wickeltechnik unter Verwendung eines Endlosfilaments. Dabei können die einzelnen Faserstrukturen bzw. Faserstrukturbauteile individuell einzeln gefertigt werden, insbesondere auch direkt auf das sie in der bestimmungsgemäßen Anwendung tragende Bauteil, d. h. in situ. In wirtschaftlicher Hinsicht kann allerdings beispielsweise auch eine (insbesondere in besagter Wickeltechnik erfolgende) Herstellung längerer rohrartiger Gebilde attraktiv sein, von denen dann die einzelnen Faserstrukturbauteile entsprechend der benötigten Breite abgelängt werden.

Im Rahmen der Umsetzung der Erfindung ist bedeutsam, dass - beim Pressen des Werkstücks - die Faserstruktur über ihren gesamten Verlauf durchgängig auf Zug beansprucht ist. Insoweit ist weiterhin ein wesentlicher Gesichtspunkt, dass die Faserstruktur in Umfangsrichtung keine allzu kleinen Radien und erst recht keinen Knick bzw. keine Ecke oder Kante hat. Der äußere Radius der Faserstruktur in Umfangsrichtung sollte vielmehr an keiner Stelle geringer sein als der 1,5-fache Wert des Radius' des Presswerkzeugs in dessen maximal geöffneter Stellung. Bevorzugt ist der äußere Radius der Faserstruktur in Umfangsrichtung sogar an keiner Stelle geringer als der 2-fache Wert des Radius' des Presswerkzeugs in dessen maximal geöffneter Stellung. Doch selbst wenn - aufgrund geometrischer Verhältnisse und/oder besonderer Belastungssituationen innerhalb der Faserstruktur örtlich ausgeprägte Spannungsspitzen existieren, so unterbindet der Faserverlauf (s. o.) das Entstehen bzw. die Ausbreitung eines Risses und somit ein Versagen des Bauteils.

Infolge der besonders hohen Festigkeit von Faserstrukturen, wie insbesondere Kohlenstoff-, aber auch anderer nichtmetallischer Faserstrukturen (z. B. Glasfaser), lassen sich leistungsstarke und trotzdem ausgesprochen kompakte Radialpressen bereitstellen. Die Kompaktheit ist dabei ein wichtiger Gesichtspunkt im Hinblick auf ein breites Anwendungsspektrum; denn für die Bearbeitung diverser Werkstückgeometrien, wie beispielsweise bei engen Bögen etc., sind raumgreifende Radialpressen hinderlich.

Gemäß einer ersten bevorzugten Weiterbildung der Erfindung sind mehrere in Richtung der Pressachse zueinander versetzt angeordnete, voneinander unabhängige Faserstrukturen vorgesehen. Auf diese Weise lassen sich die günstigen Eigenschaften des zur Herstellung der ringförmigen Faserstruktur(en) verwendeten Materials zusätzlich für eine Optimierung der Maßhaltigkeit und sonstigen Fertigungsqualität des Werkstücks ausnutzen; denn indem - in Richtung der Pressachse zueinander versetzt angeordnet - mehrere ringförmig geschlossene Faserstrukturen vorgesehen sind, wird die Gefahr maßgeblich reduziert, dass sich bei einer von der idealen Position abweichenden, längs der Pressachse in der einen oder anderen Richtung verschobenen Positionierung des Werkstücks die Radialpresse belastungsinduziert so verformt, dass eine mehr oder weniger ausgeprägt konische Pressung erfolgt.

Nur der Vollständigkeit halber ist darauf hinzuweisen, dass im Rahmen der vorliegenden Erfindung eine synchrone und übereinstimmende Bewegung sämtlicher (z. B. acht) Pressbacken zwar im Regelfall vorgesehen sein wird, aber keinesfalls zwingend ist. Vielmehr ist über geeignete Ausführung der Antriebseinheit - beispielsweise die Gestaltung der Steuerflächen der Druckringe oder sonstigen Steuerkörper - möglich, dass die Pressbacken gruppenweise unterschiedlichen Bewegungsprofilen folgen, beispielsweise indem einige Pressbacken gegenüber den anderen verzögert und/oder verlangsamt und/oder um einen reduzierten Weg bewegt werden. Dies kann bei der Herstellung von Sondergeometrien nützlich sein.

Im Folgenden wird die vorliegende Erfindung anhand verschiedener in der Zeichnung veranschaulichter bevorzugter Ausführungsbeispiele näher erläutert. Dabei zeigt
- Fig. 1: in einer teilweise geschnittenen perspektivischen Ansicht ein - nicht der Erfindung entsprechendes - erstes Vergleichsbeispiel einer Radialpresse bei geöffnetem Werkzeug,
- Fig. 2: in einer teilweise geschnittenen Draufsicht die Radialpresse nach Fig. 1,
- Fig. 3: einen Horizontalschnitt durch die Radialpresse nach den Fig. 1 und 2 auf Höhe der Pressachse bei geschlossenem Werkzeug,
- Fig. 4: in einer perspektivischen Ansicht ein - nicht der Erfindung entsprechendes - zweites Vergleichsbeispiel einer Radialpresse bei geöffnetem Werkzeug,
- Fig. 5: in einer teilweise geschnittenen perspektivischen Ansicht ein - nicht der Erfindung entsprechendes - drittes Vergleichsbeispiel einer Radialpresse bei geschlossenem Werkzeug,
- Fig. 6: die Radialpresse nach Fig. 5 aus einer anderen Perspektive, ebenfalls teilweise geschnitten,
- Fig. 7: ein einzelnes Stützsegment der Radialpresse nach den Fig. 5 und 6 mit zugehöriger Pressbacke in perspektivischer Ansicht,
- Fig. 8: das Stützsegment nach Fig. 7 (ohne Pressbacke) aus einer anderen Perspektive,
- Fig. 9: die Radialpresse nach den Fig. 5 bis 8 samt angebauter Speiseeinheit in einem Axialschnitt (ebenfalls bei geschlossenem Werkzeug),
- Fig. 10: die Speiseeinheit der Radialpresse nach Fig. 9 in teilweise geschnittener perspektivischer Ansicht
- Fig. 11: in einem Axialschnitt ein Ausführungsbeispiel einer Radialpresse nach der vorliegenden Erfindung bei geöffnetem Werkzeug.

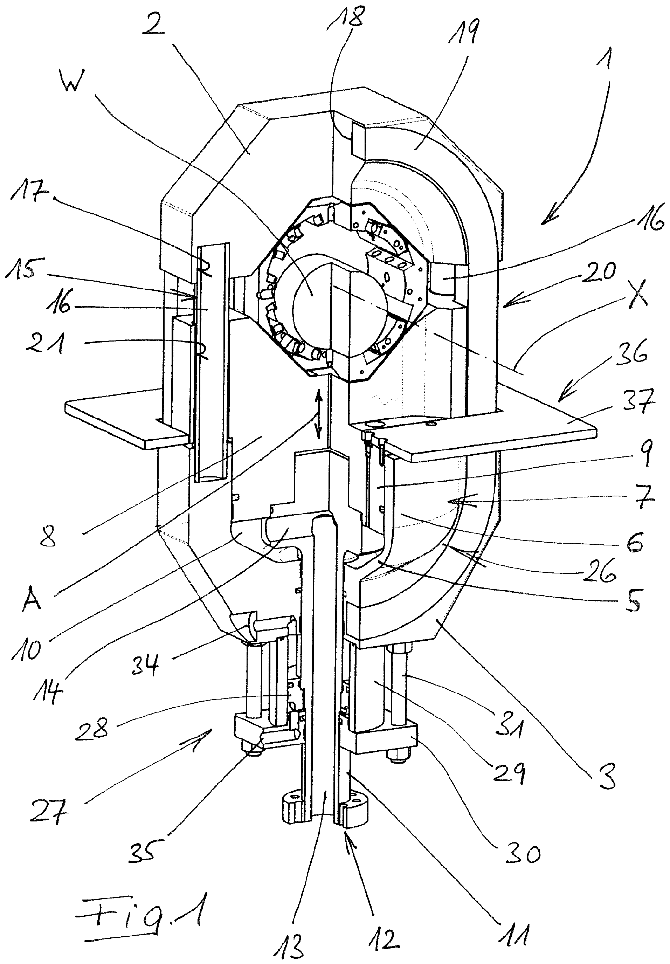

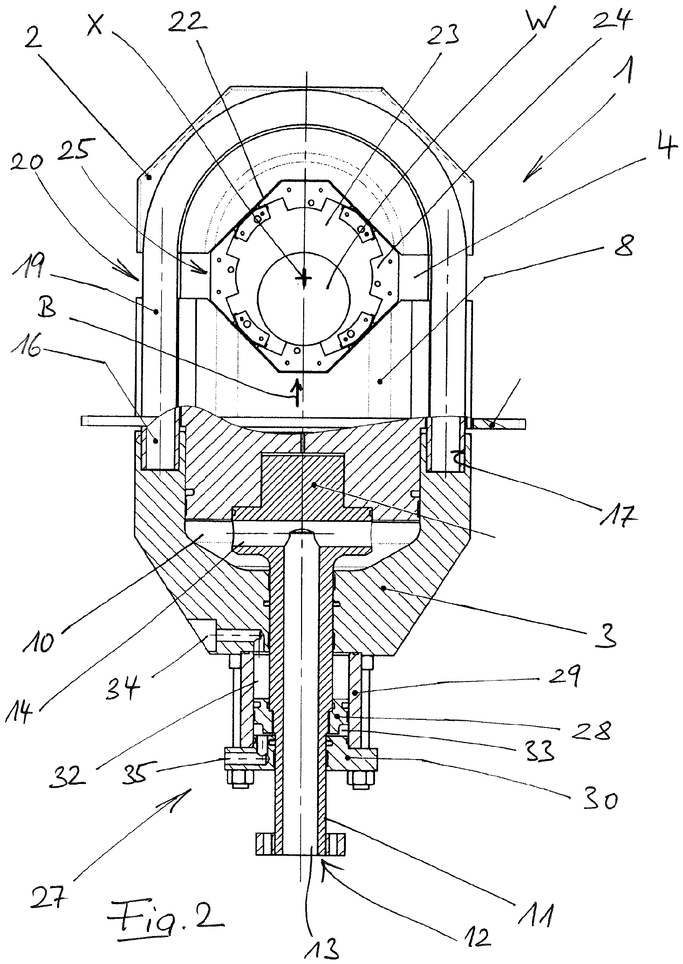

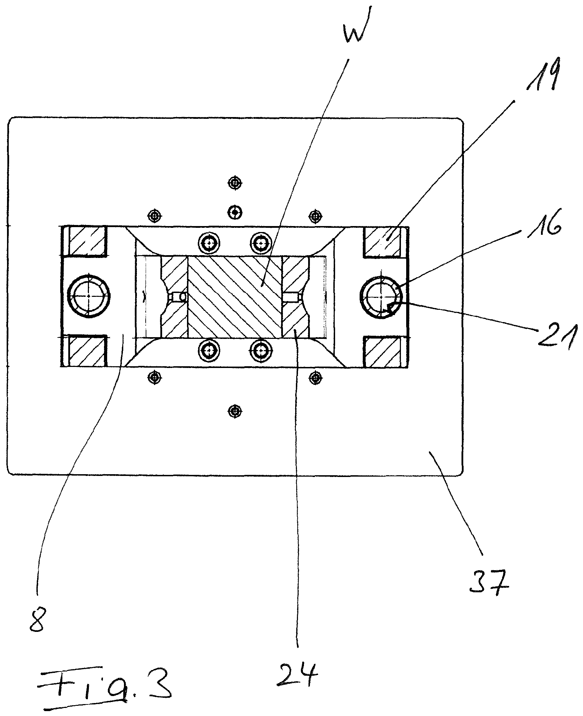

Die in den Figuren 1 bis 3 gezeigte Radialpresse nach einem ersten Vergleichsbeispiel dient der auf eine Pressachse X bezogenen Radialverformung eines Werkstücks W. Sie umfasst eine Grundstruktur 1 mit einem oberen Rahmenelement 2 und einem unteren Rahmenelement 3. Bei den beiden Rahmenelementen 2, 3 handelt es sich um voneinander getrennte Bauteile, zwischen denen eine Trennfuge 4 besteht. In das untere Rahmenelement 3 ist ein nach oben offener, einen schüsselförmigen Zylinderboden 5 und einen Zylindermantel 6 umfassender Zylinder 7 integriert. In diesem ist ein an einem Schieber 8 angeformter Kolben 9 längs der (vertikalen) Arbeitsachse A verschiebbar dichtend geführt. Der Zylinder 7 und der Kolben 9 begrenzen einen hydraulischen Arbeitsraum 10, der über den endseitig an einer hohlen Kolbenstange 11 angeordneten Hydraulikanschluss 12, die die Kolbenstange 11 längs durchsetzende Bohrung 13 und die (in den Arbeitsraum 10 mündende) Querbohrung 14 mit Hydraulikfluid beaufschlagbar ist.

Das obere Rahmenelement 2 und das untere Rahmenelement 3 sind über Führungselemente 15, nämlich über zwei - in der auf der Pressachse X senkrecht stehenden Mittelebene angeordnete - Führungsrohre 16, welche in korrespondierende Bohrungen 17 der beiden Rahmenelemente 2, 3 eingreifen, relativ zueinander justiert und positioniert und dabei auf einen vorgegebenen Abstand zueinander gehalten. Jedes der beiden Rahmenelemente 2, 3 weist an seinen beiden Stirnseiten jeweils eine Nut 18 auf, welche einen 180°-Bogen beschreibt und der Aufnahme eines geschlossenen ovalen Rings 19 aus Carbonfasern dient. Die beiden Carbonfaserringe 19, welche im Sinne der vorliegenden Erfindung jeweils eine im Wesentlichen auf der Pressachse X senkrecht stehenden Ebene in ringförmig geschlossener Form um die Pressachse X herum erstreckende Faserstruktur 20 bilden, überbrücken dabei die zwischen den beiden Rahmenelementen 2, 3 bestehende Trennfuge 4. Sie sind dabei unter Vorspannung in die besagten Nuten 18 eingelegt, so dass die beiden Rahmenelemente 2, 3 auch unter Last (s. u.) ihre durch die beiden Führungsrohre 16 vorgegebene Position zueinander zumindest im Wesentlichen einhalten. Eine bei besonders hohen Presskräften auftretende minimale Dehnung der Carbonfaserringe 19 bleibt ohne nachteilige Folgen, weil zwischen den Carbonfaserringen 19 und den Rahmenelementen 2, 3 Schlupf besteht, so dass sich die Zugspannungen gleichmäßig über die Carbonfaserringe 19 verteilen können.

Zwischen dem - mittels der beiden Führungsbohrungen 21 auf den beiden Führungsrohren 16 geführten - Schieber 8 und dem oberen Rahmenelement 2 ist in einer Weise, wie dies von Jochpressen (vgl. beispielsweise DE 4135465 A1) her bekannt ist, ein durch Stütz- und Führungsflächen 22 begrenzter Werkzeugeinbauraum 23 ausgebildet, in dem das acht Pressbacken 24 umfassende Presswerkzeug 25 aufgenommen ist. Da dies mit der Maßgabe, dass das obere Rahmenelement 2 und der Schieber 8 die Funktion der beiden Joche übernehmen, dem hinlänglich bekannten Stand der Technik entspricht, wird auf letzteren verwiesen; einer weitergehenden Erläuterung bedarf es nicht.

Das Bewegen (Pfeil B) des Schiebers 8 längs der Arbeitsachse A beim Pressen erfolgt durch Beaufschlagung des bereits weiter oben erwähnten hydraulischen Arbeitsraums 10. Insoweit stellen der Zylinder 7 und der Kolben 9 in ihrem Zusammenwirken ein Antriebselement 26 dar. Für eine Eil-Schließbewegung des Schiebers 8 sowie das Öffnen der Radialpresse ist eine zusätzliche Zylinder-Kolben-Gruppe 27 vorgesehen in Form der mit der Kolbenstange 11 verbundenen Kolbenscheibe 28, welche dichtend in einem Zylinderrohr 29 geführt ist. Dieses ist seinerseits an die untere Abschlussfläche des unteren Rahmenelements 3 angesetzt und dort mittels der Druckplatte 30, welche mit Schrauben 31 gegen das untere Rahmenelement 3 gespannt ist und einen Zylinderboden bildet, fixiert. Auf diese Weise werden ein Öffnen-Arbeitsraum 32 sowie ein Eilschließen-Arbeitsraum 33 definiert, wobei der Öffnen-Arbeitsraum 32 über den in dem unteren Rahmenelement 3 verlaufenden Öffnen-Anschluss 34 und der Eilschließen-Arbeitsraum 33 über den in der Druckplatte 30 verlaufenden Eilschließen-Anschluss 35 beaufschlagbar sind.

Erkennbar ist in den Figuren 1 bis 3 weiterhin der Arbeitstisch 36 in Form einer mit dem Schieber 8 verbundenen, nämlich auf der oberen Stirnfläche des Kolbens 9 fixierten Platte 37.

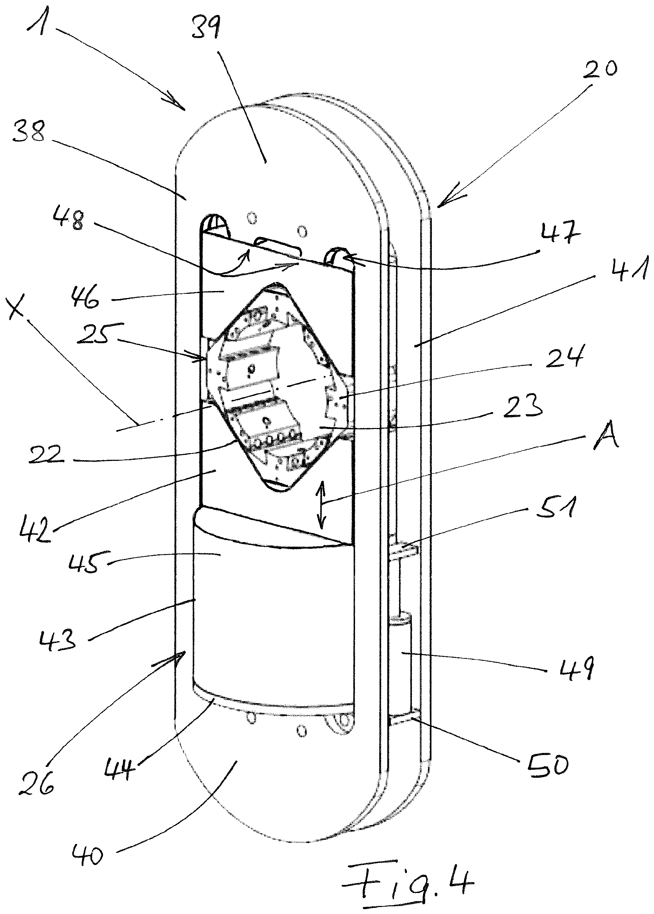

Die in Figur 4 gezeigte Radialpresse nach einem zweiten Vergleichsbeispiel hat erhebliche konstruktive Parallelen zu der Radialpresse nach den Figuren 1 bis 3. Insoweit wird, soweit sich aus den nachfolgenden Erläuterungen nichts Anders ergibt, zum Verständnis dieses Ausführungsbeispiels auf die Ausführungen zu der Radialpresse nach dem in den Figuren 1 bis 3 veranschaulichten ersten Vergleichsbeispiel verwiesen.

Eine der Besonderheiten der Radialpresse nach Figur 4 besteht darin, dass als Faserstrukturen 20 statt "einfacher" ovaler Ringe zwei ringförmig geschlossene, konturierte Faserverbundelemente 38 vorgesehen sind. Sie sind gemeinsam gleichzeitig die wesentliche Grundstruktur 1 der Radialpresse und besitzen jeweils einen ausgesteiften oberen Stützbereich 39 und einen ausgesteiften unteren Stützbereich 40 sowie zwei sich parallel zur Arbeitsachse erstreckende Zugbereiche 41; so übernehmen die beiden Faserverbundelemente 38 teilweise auch die Funktion, die bei der Radialpresse nach den Figuren 1 bis 3 den beiden Rahmenelementen 2, 3 zukommt. Das dem Verschieben des (jochartigen) unteren Steuerkörpers 42 beim Pressen längs der Arbeitsachse A dienende, als einfache Zylinder-Kolben-Einheit 43 ausgeführte Antriebselement 26 stützt sich (über eine mit dem Kolben verbundene Fußplatte 44) an den unteren Stützbereichen 40 der beiden Faserverbundelemente 38 ab, während der untere Steuerkörper 42 fest mit dem Zylinder 45 der Zylinder-Kolben-Einheit 43 verbunden ist. Und der (ebenfalls jochartige) obere Steuerkörper 46 stützt sich an den oberen Stützbereichen 39 der beiden Faserverbundelemente 38 ab. Erkennbar ist, dass die Abstützung des oberen Steuerkörpers 46 an den (gemeinsam ein Widerlager 47 bildenden) oberen Stützbereichen 39 der beiden Faserverbundelemente 38 jeweils an zwei zueinander beabstandeten Stützzonen 48 erfolgt.

Die beiden Faserverbundelemente 38 sind über nicht dargestellte Distanzelemente auf einen größtmöglichen axialen Abstand zueinander gehalten, d. h. auf einen solchen Abstand, dass die äußeren Stirnflächen der Faserverbundelemente 38 und die äußeren Stirnflächen der beiden Steuerkörper 42, 46 zueinander fluchten.

Für eine Eil-Schließbewegung des unteren Steuerkörpers 42 sowie das Öffnen der Radialpresse sind zwei zusätzliche, seitlich der Zylinder-Kolben-Einheit 43 zwischen den beiden Faserverbundelementen 38 angeordnete Hydraulikzylinder 49 vorgesehen. Diese sind jeweils einerseits an einer mit der Fußplatte 44 der Zylinder-Kolben-Einheit 43 verbundenen unteren Lasche 50 und andererseits an einer mit dem Zylinder 45 der Zylinder-Kolben-Einheit 43 verbundenen oberen Lasche 51 angelenkt.

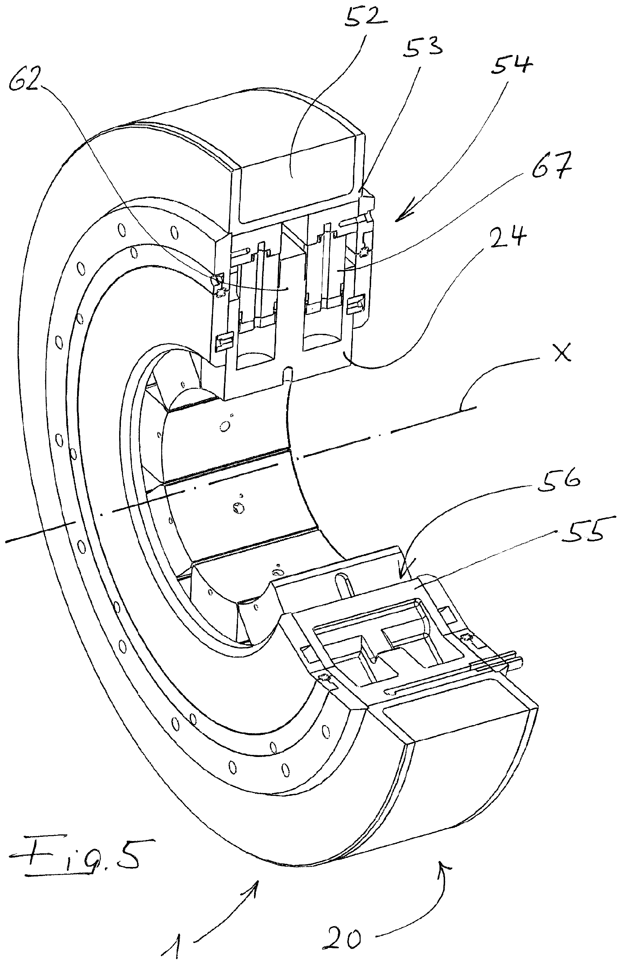

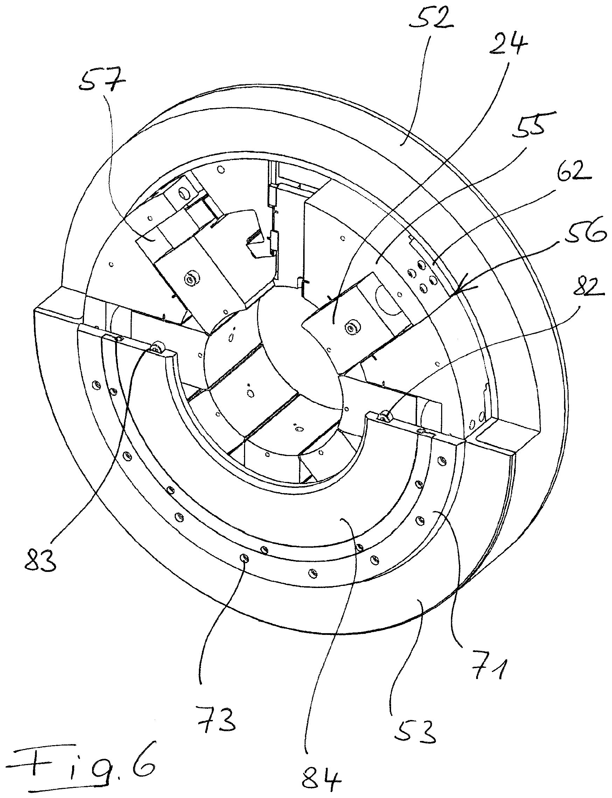

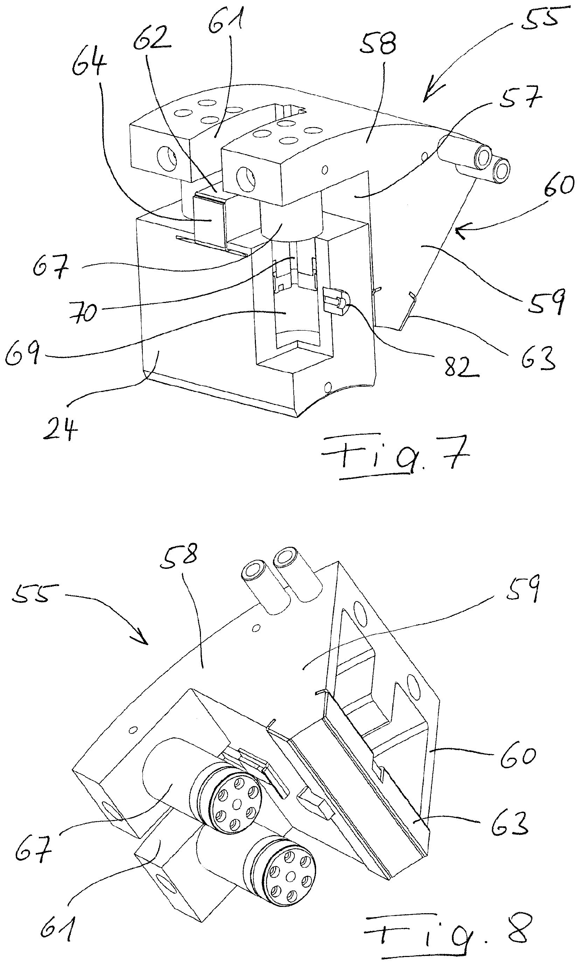

Die Figuren 5 bis 10 veranschaulichen eine Radialpresse nach einem dritten Vergleichsbeispiel. Auch hier bildet die Faserstruktur 20, welche die Pressbacken 24 umgibt und sich radial außerhalb der Pressbacken 24 in einer auf der Pressachse X senkrecht stehenden Ebene in ringförmig geschlossener Form um die Pressachse X herum erstreckt, einen Teil der Grundstruktur 1. Hierzu ist ein runder, flacher Carbonfaserring 52 dergestalt in einem Trägerring 53 aufgenommen, dass der Carbonfaserring 52 radial innen sowie an beiden Stirnseiten gefasst ist. Der Trägerring 53 umgibt, eng an dieser anliegend, eine Kernstruktur 54. Die Kernstruktur 54 hinwiederum hat die Gestalt einer aus acht identischen Stützsegmenten 55 ringförmig zusammengefügten Stützstruktur 56, welche acht Aussparungen 57 aufweist, in denen jeweils eine zugeordnete Pressbacke 24 radial verschiebbar geführt ist. Jedes Stützsegment 55 weist somit (vgl. Fig. 7 und 8) eine sich über einen Bogen von etwa 45° erstreckenden Basis 58 auf, an die - radial nach innen gerichtet - ein schmalerer Führungskeil 59 (mit etwa 45° Keilwinkel) dergestalt angeformt ist, dass neben ihm eine der Aufnahme einer Pressbacke 24 dienende Aussparung 57 verbleibt, wobei diese Aussparung 57 bei montierter Radialpresse von der Seitenfläche 60 des Führungskeils 59 des benachbarten Stützsegments 55 begrenzt wird.

Im Bereich der Aussparung 57 weist die Basis 58 des Stützsegments 55 jeweils einen Durchbruch 61 auf, in welchen ein radial außen an der zugeordneten Pressbacke 24 angeformter Führungsvorsprung 62 hineinragt. Im Interesse einer reibungsarmen Bewegbarkeit der Pressbacken 24 in der jeweils zugeordneten Aussparung 57 sind an den "Spitzen" der Führungskeile 59 Gleitbleche 63 angeordnet. Weitere Gleitblechstreifen 64 sind an den Pressbacken 24 im Bereich der Führungsvorsprünge 62 angebracht.

Auf die acht Pressbacken 24 wirken diesen einzeln zugeordnete hydraulische Antriebselemente 26. Hierzu weist jede Pressbacke 24 zwei Sackbohrungen 65 auf, welche jeweils einen Arbeitszylinder 66 (Nehmerzylinder) bilden und in die jeweils ein an der Basis 58 des zugeordneten Stützsegments 55 fixierter Arbeitskolben 67 dichtend hineinragt. Jeder Arbeitskolben 67 ist dergestalt axial durchbohrt, dass an seiner freien Stirnfläche 68, welche gemeinsam mit dem zugeordneten Arbeitszylinder 66 einen hydraulischen Arbeitsraum 69 begrenzt, ein Fluidkanal 70 austritt, welcher über einen durch das zugeordnete Stützsegment 55 und einen der beiden stirnseitigen Lagerringe 71 hindurch geführten Leitungsabschnitt 72 mit einem an dem betreffenden Lagerring 71 angeordneten Hydraulikanschluss 73 in Verbindung steht.

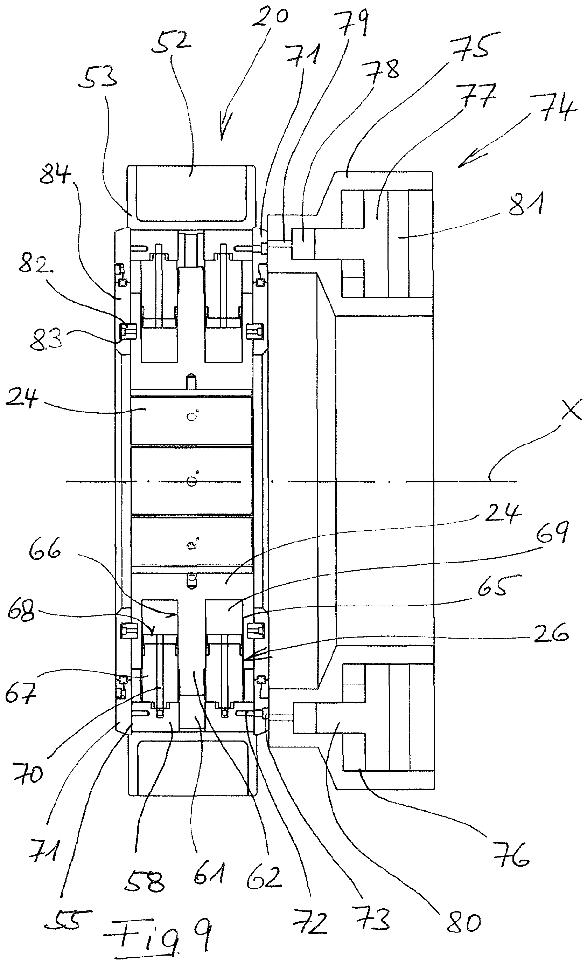

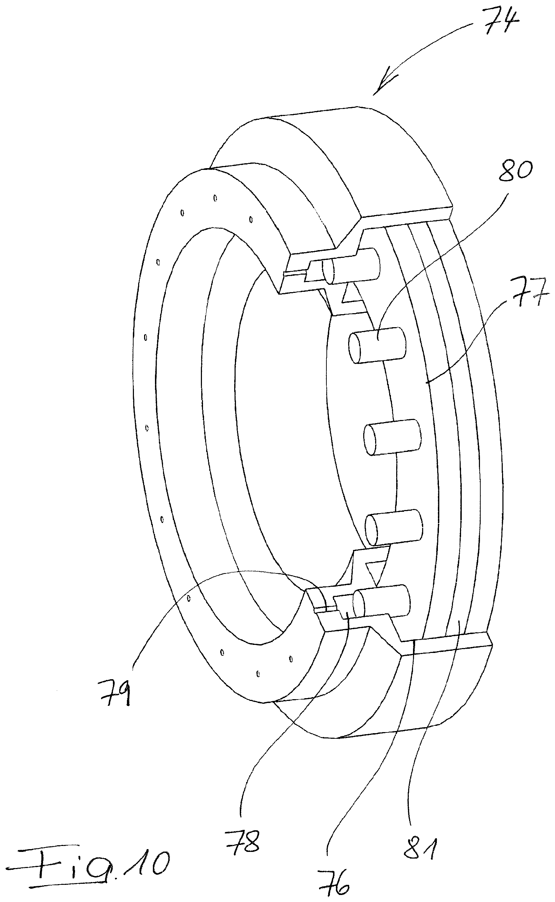

Zur Beaufschlagung der Arbeitszylinder 66 (Nehmerzylinder) eignet sich beispielsweise die in den Figuren 9 und 10 veranschaulichte, einen integrierten hydraulischen Druckverstärker aufweisende Speiseeinheit 74. Diese umfasst ein die Pressachse X umgebendes Ringgehäuse 75 mit einem Ringzylinder 76, in welchem ein Ringkolben 77 parallel zur Pressachse X verschiebbar geführt ist. In dem Ringgehäuse sind sechzehn (sich parallel zur Pressachse X erstreckende) Geberzylinder 78 ausgeführt, die mit jeweils einem (mit einem Hydraulikanschluss 73 verbindbaren) Druckausgang 79 kommunizieren. In jedem Geberzylinder 78 ist ein Geberkolben 80 dichtend geführt, wobei die sechzehn Geberkolben 80 mit dem Ringkolben 77 fest verbunden sind. Auf der gegenüberliegenden Seite des Ringkolbens 77 befindet sich ein (über einen nicht gezeigten Hauptanschluss beaufschlagbarer) Niederdruckraum 81. Seitlich, d. h. an beiden Stirnseiten der Pressbacken 24 in Richtung der Pressachse X, stehen von den Pressbacken 24 jeweils zwei Steuerzapfen 82 ab. Diese greifen in jeweils eine zugeordnete Steuerkulisse 83 eines Steuerrings 84 ein, welcher an dem auf der betreffenden Stirnseite der Radialpresse vorgesehenen Lagerring 71 um die Pressachse X drehbar gelagert ist. Je nach der Ausführung der Steuerkulissen 83 lässt sich auf diese Weise durch Drehen der beiden Steuerringe 84 die Presse (durch radial nach außen gerichtete Bewegung der Pressbacken 24) öffnen und/oder eine Eilzustellung der Pressbacken 24 bewirken, um diese vor dem unter Verwendung der Speiseeinheit (s. o.) erfolgenden Kraftpressen in Anlage an das Werkstück zu bringen.

Die in den Figuren 5 bis 10 veranschaulichte, dem Vergleich dienende, Radialpresse zeichnet sich - unabhängig von der Verwendung des Carbonfaserringes 52 - durch eine Mehrzahl von Gestaltungsmerkmalen und sonstigen strukturellen Besonderheiten aus. Dies gilt namentlich für den Aufbau einer innerhalb eines (aus einem beliebigen geeigneten Material bestehenden) Zugringes angeordneten Kernstruktur aus einzelnen, zu einem Ring zusammengefügten Segmenten, für den Einzelantrieb der Pressbacken mittels einzelner, den individuellen Pressbacken zugeordneter, bevorzugt paarweise vorgesehener, einzeln, gruppenweise oder gemeinsam beschickter Nehmerzylinder, für die synchrone Beaufschlagung der Nehmerzylinder aus einer ringförmigen, sich bevorzugt um die Pressachse herum erstreckenden gemeinsamen Speiseeinheit, für die Integration einer Druckübersetzung in eine mehrere Nehmerzylinder versorgende Speiseeinheit durch mechanische Koppelung einer Mehrzahl von Geberzylindern mit einem Hauptzylinder, etc.

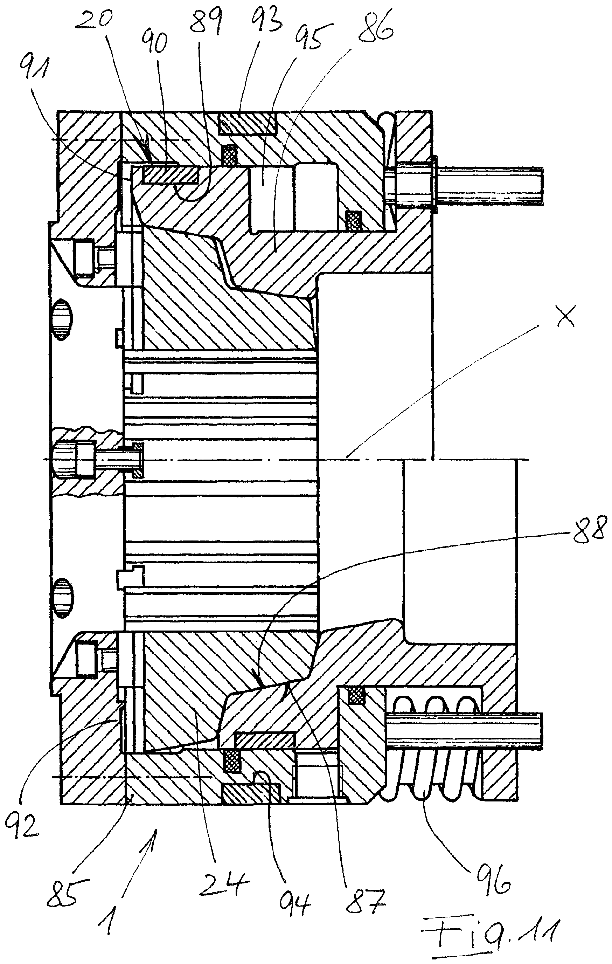

Bei dem in Fig. 11 der Zeichnung veranschaulichten Ausführungsbeispiel der Erfindung handelt es sich um eine Radialpresse, wie sie ihrer Bauart und Funktionsweise nach aus der DE 2844475 A1 bekannt und dort eingehend (im Zusammenhang mit der dortigen Fig. 1) beschrieben ist. Die Grundstruktur 1 ist hier in Form eines Gehäuses 85 ausgeführt. Und die Antriebseinheit umfasst einen parallel zur Pressachse X verschiebbaren Druckring 86, der mit ersten Steuerflächen 87 der Pressbacken 24 zusammenwirkende zweite Steuerflächen 88 aufweist. Bei dieser Radialpresse wird die vorliegende Erfindung zum einen dadurch umgesetzt, dass der Druckring 86 in Verbundbauweise ausgeführt ist, indem er einen in eine korrespondierende Aufnahmenut 89 eingebetteten, die Faserstruktur 20 bildenden ersten Carbonfaserring 90 aufweist. Angeordnet ist dieser benachbart jener Stirnseite 91 des Druckringes 86, die dem Widerlager 92, an welchem sich die Pressbacken 24 radial verschiebbar geführt abstützen, benachbart ist. Dort nimmt die radiale Wandstärke des Druckrings 86 bauartbedingt ab, so dass die festigkeitssteigernde Wirkung des ersten Carbonfaserringes 90 hier besonders effektiv wirkt.

Zum anderen ist ein zweiter Carbonfaserring 93, wiederum in eine korrespondierende umlaufende Aufnahmenut 94 eingebettet, am Außenumfang des Gehäuses 85 vorgesehen, und zwar radial außerhalb des Zylinderraumes 95. Dort wirken bei einer Beaufschlagung des Zylinderraumes 95 mit hohem Fluiddruck erhebliche Kräfte und Spannungen, die besonders wirksam mittels des zweiten Carbonfaserringes 93 aufgefangen werden können.

In der vorstehend im Zusammenhang mit Fig. 11 beschriebenen Umsetzung der Erfindung lassen sich Radialpressen dieser grundsätzlichen Bauweise besonders kompakt gestalten, d. h. insbesondere mit gegenüber dem Stand der Technik reduzierten Außenabmessungen; bzw. Radialpressen mit Abmessungen, wie sie aus dem Stand der Technik bekannt sind, lassen sich ohne Gefahr für ihre Funktion mit höheren Drücken betreiben, so dass entsprechend höhere Umformkräfte zur Verfügung stehen als bei gleich großen Radialpressen nach dem Stand der Technik.

Das gilt Übrigens unabhängig davon, ob das Öffnen der Presse, wie bei dem Ausführungsbeispiel veranschaulicht, über mechanische Rückhubfedern 96 erfolgt oder aber über einen Rückhubzylinder. Und auch auf nach dem gleichen Funktionsprinzip basierende, insoweit ähnliche, sich allerdings hinsichtlich der konstruktiven Gestaltung des Druckrings 86 und des Gehäuses 85 von der DE 2844475 A1 unterscheidende Radialpressen (vgl. beispielsweise EP 1302255 B1) lässt sich die Erfindung in entsprechender Weise anwenden.

## Patentansprüche

1. Radialpresse, welche als Druckring- oder Hohlkolbenpresse ausgeführt ist, mit einem eine Grundstruktur (1) bildenden Gehäuse (85), einem in diesem parallel zu einer Pressachse (X) verschiebbaren Druckring (86) bzw. Hohlkolben, einer Mehrzahl von um die Pressachse (X) herum angeordneten Pressbacken (24) und einer auf diese wirkenden, sich an der Grundstruktur (1) abstützenden Antriebseinheit, mittels derer die Pressbacken (24) radial auf die Pressachse (X) zu bzw. von dieser weg bewegbar sind, **gekennzeichnet durch** die folgenden Merkmale:
radial außerhalb der Pressbacken (24) ist mindestens eine diese umgebende, sich in einer im Wesentlichen auf der Pressachse (X) senkrecht stehenden Ebene in ringförmig geschlossener Form um die Pressachse herum erstreckende Faserstruktur (20) vorgesehen;
die Faserstruktur (20) ist Teil der Antriebseinheit,
indem der verschiebbare Druckring (86) bzw. Hohlkolben die Faserstruktur (20) enthält.

2. Radialpresse nach Anspruch 1, **dadurch gekennzeichnet, dass** mehrere in Richtung der Pressachse (X) zueinander versetzt angeordnete Faserstrukturen (20) vorgesehen sind.

3. Radialpresse nach Anspruch 1 oder Anspruch 2, **dadurch gekennzeichnet, dass** die mindestens eine Faserstruktur (20) Teil einer geschlossenen Grundstruktur (1) ist, indem sie umlaufend an einer Kernstruktur (54) anliegt, in welcher die Pressbacken (24) beweglich gelagert sind.

4. Radialpresse nach Anspruch 3, **dadurch gekennzeichnet, dass** radial innerhalb der Faserstruktur (20) eine Stützstruktur (56) angeordnet ist, welche eine Mehrzahl von Aussparungen (57) aufweist, in denen die Pressbacken (24) radial verschiebbar geführt sind.

5. Radialpresse nach Anspruch 4, **dadurch gekennzeichnet, dass** auf die Pressbacken (24) diesen einzeln zugeordnete hydraulische Antriebselemente (26) wirken.

6. Radialpresse nach Anspruch 5, **dadurch gekennzeichnet, dass** die hydraulischen Antriebselemente (26) als Nehmerzylinder (66) ausgeführt und von jeweils einem zugeordneten Geberzylinder (78) beaufschlagt sind, wobei sämtliche Geberzylinder (78) mechanisch gekoppelt sind.

7. Radialpresse nach Anspruch 6, **dadurch gekennzeichnet, dass** die mechanische Kopplung der Geberzylinder (78) über einen Hauptzylinder erfolgt, der als Ringzylinder ausgeführt ist mit einem Ringkolben (77) mit einer parallel zur Pressachse (X) orientierten Bewegungsrichtung.

8. Radialpresse nach einem der Ansprüche 4 bis 7, **dadurch gekennzeichnet, dass** die Stützstruktur (56) eine Mehrzahl einzelner, zu einem Ring zusammengefügter Stützsegmente (55) umfasst.

## Claims

1. Radial press designed as a compression ring or hollow piston press with a housing (85) forming a basic structure (1), a compression ring (86) or hollow piston that can be displaced, in said housing (85), parallel to a press axis (X), a multiplicity of press jaws (24) disposed around the press axis (X) and a drive unit, which acts on the multiplicity of press jaws and is braced on the basic structure (1), by means of which the press jaws (24) can be moved radially toward and away from the press axis (X), **characterized by** the following features:
radially outside the press jaws (24) at least one fiber structure (20) is provided that surrounds them by extending in annularly closed form around the press axis in a plane oriented substantially perpendicular to the press axis (X);
the fiber structure (20) is part of the drive unit, the displaceable compression ring (86) or hollow piston containing the fiber structure (20).

2. Radial press according to claim 1,
**characterized in that** several fiber structures (20) disposed in a manner offset from one another in the direction of the press axis (X) are provided.

3. Radial press according to claim 1 or claim 2,
**characterized in that** the at least one fiber structure (20) is part of a closed basic structure (1), wherein it bears circumferentially on a core structure (54), in which the press jaws (24) are mounted movably.

4. Radial press of claim 3,
**characterized in that** a bracing structure (56), which is provided with a multiplicity of recesses (57), in which the press jaws (24) are guided in radially displaceable manner, is disposed radially inside the fiber structure (20).

5. Radial press of claim 4,
**characterized in that** hydraulic drive elements (26) individually associated to the press jaws (24) act on these.

6. Radial press of claim 5,
**characterized in that** the hydraulic drive elements (26) are constructed as slave cylinders (66) and are pressurized by respectively one associated master cylinder (78), wherein all master cylinders (78) are mechanically coupled.

7. Radial press of claim 6,
**characterized in that** the mechanical coupling of the master cylinders (78) takes place via a main cylinder, which is constructed as an annular cylinder with an annular piston (77) having a direction of movement oriented parallel to the press axis (X).

8. Radial press of one of claims 4 to 7,
**characterized in that** the bracing structure (56) comprises a multiplicity of individual bracing segments (55) joined together as a ring.

## Revendications

1. Presse radiale, laquelle est réalisée sous la forme d'une presse à anneau de pression ou à piston creux avec un bâti (85) formant une structure de base (1), un anneau de pression (86) ou piston creux déplaçable dans celui-ci parallèlement à un axe de presse (X), une pluralité de mâchoires de presse (24) disposées autour de l'axe de presse (X) et une unité d'entraînement agissant sur celles-ci, s'appuyant sur la structure de base (1), au moyen de laquelle les mâchoires de presse (24) peuvent être déplacées radialement sur l'axe de presse (X) vers ou depuis celui-ci, **caractérisée par** les caractéristiques suivantes :
radialement en dehors des mâchoires de presse (24), est prévue au moins une structure fibreuse (20) entourant celles-ci, s'étendant dans un moule fermé de forme annulaire autour de l'axe de presse, dans un plan situé perpendiculairement pour l'essentiel sur l'axe de presse (X) ,
la structure fibreuse (20) fait partie de l'unité d'entraînement, l'anneau de pression (86) mobile ou piston creux contenant la structure fibreuses (20).

2. Presse radiale selon la revendication 1, **caractérisée en ce que** plusieurs structures fibreuses (20) disposées décalées les uns par rapport aux autres en direction de l'axe de presse (X) sont prévues.

3. Presse radiale selon la revendication 1 ou la revendication 2, **caractérisée en ce qu'**au moins une structure fibreuse (20) fait partie d'une structure de base (1) fermée celle-ci reposant périphériquement sur une structure centrale (54) dans laquelle les mâchoires de presse (24) sont logées de façon mobile.

4. Presse radiale selon la revendication 3, **caractérisée en ce qu'**une structure de support (56) est disposée radialement à l'intérieur de la structure fibreuse (20), laquelle comporte une pluralité d'évidements (57) dans lesquels les mâchoires de presse (24) sont guidées de façon radialement mobile.

5. Presse radiale selon la revendication 4, **caractérisée en ce que** sur les mâchoires de presse (24) agissent ces éléments d'entraînement hydrauliques (26) attribués individuellement à celles-ci.

6. Presse radiale selon la revendication 5, **caractérisée en ce que** les éléments d'entraînement hydrauliques (26) sont exécutés comme des cylindres récepteurs (66) et sont respectivement sollicités par un cylindre capteur attribué (78), sachant que tous les cylindres capteurs (78) sont mécaniquement couplés.

7. Presse radiale selon la revendication 6, **caractérisée en ce que** l'accouplement mécanique des cylindres capteurs (78) a lieu par le biais d'un cylindre principal, qui est exécuté sous la forme d'un cylindre annulaire avec un piston annulaire (77) avec une direction de déplacement orientée parallèlement à l'axe de presse (X).

8. Presse radiale selon l'une quelconque des revendications 4 à 7, **caractérisée en ce que** la structure de support (56) comprend une pluralité de segments de support (55) individuels réunis en un anneau.
